# EUROPÄISCHE PATENTSCHRIFT

(11) **EP 1 509 092 B1**
(45) Veröffentlichungstag und Bekanntmachung des Hinweises auf die Patenterteilung: **17.01.2007**
(21) Anmeldenummer: 03729989.8
(22) Anmeldetag: 08.05.2003
(51) Int. Cl.: A23G 1/20, A23G 3/02

(54) **VERFAHREN UND VORRICHTUNG ZUM HERSTELLEN VON VERZEHRGÜTERN**
METHOD AND DEVICE FOR PRODUCING CONFECTIONERY PRODUCTS
PROCEDE ET DISPOSITIF DE FABRICATION DE PRODUITS ALIMENTAIRES

(30) Priorität: 27.05.2002 DE 10223568; 11.11.2002 DE 10252633
(43) Veröffentlichungstag der Anmeldung: 02.03.2005
(73) Patentinhaber: KMB Produktions AG, 8552 Felben (CH)
(72) Erfinder: KNOBEL, Guido, 8552 Felben (CH)
(74) Vertreter: Weiss, Peter
(86) Internationale Anmeldenummer: PCT/EP2003/004812
(87) Internationale Veröffentlichungsnummer: WO 2003/099031

(56) Entgegenhaltungen:
- EP-A- 0 914 774
- EP-A- 0 920 810
- WO-A-97/49296
- GB-A- 996 995
- GB-A- 1 183 777

## Beschreibung

Die Erfindung betrifft ein Verfahren zum Herstellen von Verzehrgütern mit einer äusseren Schale aus einer Masse, die in eine Formeingegeben wird, in welche dann ein temperierter Stempel eintaucht, wobei die Masse nach dem Eintauchen des Stempels unter einen zusätzlichen Druck gesetzt wird.

In der DE 197 20 844 C1 wird bspw. ein Verfahren und eine Vorrichtung zum Herstellen von verzehrgütern mit einer äusseren Schale beschrieben, welche durch einen in eine Form eintauchenden temperierten Stempel fliessgepresst hergestellt wird, wobei der Taupunkt, der das Verzehrgut umgebenden Atmosphäre unter der Temperatur des Stempels gehalten wird.

Bei diesem Verfahren ist es nicht möglich, die Schokoladenmasse so genau zu bestimmen, dass der Rand des Konfiserieproduktes mit dem Rand der Form abschliesst. Um einen glatten, ebenen Rand auszuformen, wird in vielen Fällen mehr Schokoladenmasse in einen Formraum eingegeben, als benötigt wird. Diese tritt dann über den Formrand hinaus und muss entweder mit einem Messer oder auf andere Art und weise entfernt werden. Dies ist umständlich und erfordert einen zusätzlichen Arbeitsschritt.

Aus der EP 0 914 774 A1 und der EP 0 920 810 A1 ist jeweils eine Vorrichtung zum Herstellen von Konfiserieprodukten bekannt. Dabei wird eine vorbestimmte Masse in eine Form eingegeben und ein gekühlter Stempel abgesenkt. Diesen gekühlten Stempel umgibt ein Ring, der bereits dann auf der Form aufliegt und den Formhohlraum verschliesst, wenn der eigentliche Stempel noch nicht vollständig in die fliesszupressende Masse abgesenkt ist. Nach dem Aufliegen des Rings erfolgt ein weiteres Absenken des Stempels, so dass die Masse im gesamten Formhohlraum verteilt wird.

Aus der GB 1 183 777 ist ein Verfahren und eine Vorrichtung der o.g. Art bekannt. Dabei wird zuerst ein Formhohlraum mit einem Stempel verschlossen. In dem Formhohlraum befindet sich die Schokoladenmasse. Nunmehr wird der Formhohlraum über eine Zuleitung mit Druckluft beaufschlagt, so dass die Schokoladenmasse im Formhohlraum verteilt wird und überschüssige Schokoladenmasse durch verschiedene Kanalsysteme zurück in den Schokoladenspeicher gelangt.

Der vorliegenden Erfindung liegt die Aufgabe zugrunde, ein Verfahren und eine Vorrichtung der o. g. Art zu entwickeln, mit denen gesichert bei gleichbleibender herzustellender Form des Verzehrgutes Lufteinschlüsse im Formraum beseitigt werden.

Zur Lösung dieser Aufgabe führt, dass ein in dem Stempel geführter Verdrängungsstempel in die Masse eingetaucht oder ein zumindest teilweise elastischer Stempel nach dem Eintauchen mit einem höheren Innendruck beaufschlagt wird.

Dies bedeutet, dass nach dem Eintauchen des Stempels Lufteinschlüsse ausgepresst oder bisher von der Schokoladenmasse noch nicht gefüllte Räume gefüllt werden.

In einem Ausführungsbeispiel wird ein Verdrängungsstempel benutzt, der in einer Axialbohrung in dem eigentlichen Formstempel geführt ist. Nachdem der Formstempel in den Formraum abgesenkt ist, wird dieser Verdrängungsstempel geringfügig unter Druck gesetzt, so dass er aus dem Formstempel heraustritt und Schokoladenmasse so verpresst, dass noch nicht gefüllte Räume gefüllt werden.

In einem bevorzugten Ausführungsbeispiel ist vorgesehen, dass der Verdrängungsstempel beim Eintauchen in die Schokoladenmasse etwas in seiner Bohrung im Formstempel zurückgezogen ist, so dass sich ein zusätzlicher Raum für Schokoladenmasse bildet. Nach dem Absenken wird der verdrängungsstempel so geführt, dass die sich in dem zusätzlichen Raum befindliche Schokoladenmasse ausgepresst wird. Schlussendlich liegt der Verdrängungsstempel mit seiner Stirnfläche in der Ebene des Formstempels. Dadurch wird vermieden, dass beispielsweise der Boden einer Schale gegenüber den Seitenwänden etwas verdünnt wird.

Bei einem weiteren Ausführungsbeispiel der Erfindung ist der Formteil des Formstempels aus einem elastischen Werkstoff hergestellt. Hierzu bieten sich alle denkbaren elastischen Werkstoffe an, wobei es sich auch um dickere, metallische Folien handeln kann, die in gewissem Umfang dehnbar sind. Vor allem ist natürlich an Kunststoff gedacht.

Der Innenraum des Stempels und insbesondere der elastische Teil des Stempels wird mit einem Druckmedium gefüllt, welches unter einem vorbestimmten Druck steht, so dass der elastische Teil die gewünschte Innenform der Schale annimmt. Als Druckmedium wird bevorzugt Kühlflüssigkeit verwendet.

Nach dem Absenken des Stempels in den Formraum wird nun der Druck auf das Kühlmedium erhöht, so dass sich der elastische Teil des Formstempels in gewissem Umfange ausdehnt. Hierdurch wird ein Druck auf die Schokoladenmasse ausgeübt, so dass die letzten freien Hohlräume in dem Formraum gefüllt werden.

Es ist auch daran gedacht, nur einen Teil des Formstempels elastisch auszuführen. Hierzu weist der an sich starre Formstempelteil eine Öffnung auf, die mit einer elastischen Membran verschlossen ist. Auf die Membran drückt ein Druckmedium wiederum mit einem voreingestellten Druck, so dass die Membran sich nicht ausdehnt. Bevorzugt ist die Membran noch nach innen gestülpt. Als Druckmedium wird auch hier bevorzugt Kühlflüssigkeit verwendet.

Nach dem Absenken des Formstempels wird nun der Druck auf die Kühlflüssigkeit erhöht, so dass die Membran ausgedehnt bzw. bevorzugt umgestülpt wird. Dies bewirkt, dass vor der Membran befindliche Schokoladenmasse verdrängt und Lufteinschlüsse verschlossen werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
den Figuren 1.1 bis 1.3 teilweise dargestellte Querschnitte durch eine erfindungsgemässe Vorrichtung zum Herstellen von Schokoladenschalen;
Figuren 2.1 bis 2.3 vergrössert dargestellte Ausschnitte aus den Figuren 1.1 bis 1.3 in den Bereichen A, B und C;
Figuren 3.1 bis 3.3 teilweise dargestellte Querschnitte durch ein weiteres Ausführungsbeispiel einer erfindungsgemässen Vorrichtung zum Herstellen von Schokoladenschalen in verschiedenen Gebrauchslagen;
Figuren 4.1 bis 4.3 teilweise dargestellte Querschnitte durch ein weiteres Ausführungsbeispiel einer erfindungsgemässen Vorrichtung zum Herstellen von Schokoladenschalen in verschiedenen Gebrauchslagen;
Figuren 5.1 bis 5.3 vergrössert dargestellte Ausschnitte aus den Figuren 4.1 bis 4.3 in den Bereichen E, F und G.

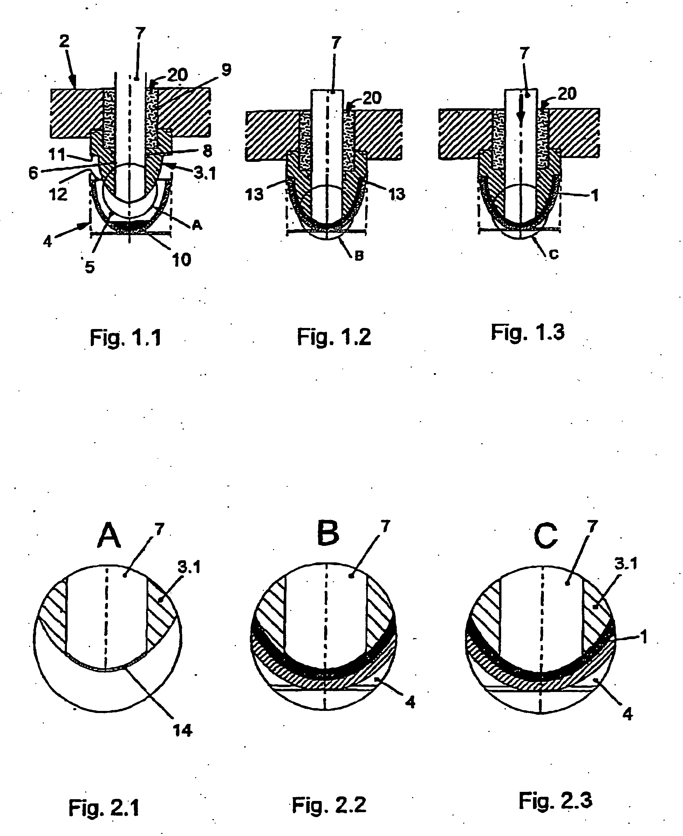

Von einer Vorrichtung zum Herstellen von Schokoladenschalen 1 sind in den Figuren 1.1 bis 1.3, 3.1 bis 3.3 und 4.1 bis 4.3 eine Formplatte 2 gezeigt, an der sich ein Stempel 3.1 befindet. Dem Stempel 3.1 gegenüber liegt eine Form 4, in der ein Formraum 5 ausgebildet ist.

Den Stempel 3.1 durchzieht eine Axialbohrung 6, in welcher ein Verdrängungsstempel 7 geführt ist. Der Verdrängungsstempel 7 ist gegenüber dem Stempel 3.1 durch einen O-Ring 8 abgedichtet. Ferner ist um den Verdrängungsstempel 7 ein Ringraum 9 vorgesehen, in dem Kühlwasser 20 geführt ist.

Die Funktionsweise der vorliegenden Erfindung gemäss den Figuren 1.1 bis 1.3 ist folgende:

In dem Formraum 5 befindet sich gemäss Figur 1.1 eine Schokoladenmasse 10. Der gekühlte Stempel 3.1, der an der Formplatte 2 angeordnet ist, wird mit dieser abgesenkt und bildet zusammen mit dem Formraum 5 einen Raum, in dem die Schokoladenschale 1 gemäss Figur 1.2 zumindest teilweise ausgebildet wird. Dabei liegt eine Schulter 11 des Stempel 3.1 einer Ringkante 12 der Form 4 auf.

Bevorzugt wird etwas weniger Schokoladenmasse 10 in den Formraum 5 eingegeben, so dass sich bei Ausbildung des Raumes für die Schokoladenschale 1 gemäss Figur 1.2 Lufteinschlüsse 13 ergeben. Um diese auszupressen, wird nun der Verdrängungsstempel 7 gemäss Figur 1.3 abgesenkt. Er taucht in die Schokoladenmasse ein und verdrängt diese so, dass die Lufteinschlüsse ausgepresst werden.

Eine verbesserte Möglichkeit gemäss den Figuren 2.1 bis 2.3 sieht vor, dass der Verdrängungsstempel 7 beim Eintauchen des Stempels 3.1 in die Schokoladenmasse 5 etwas zurückgezogen ist, so dass sich ein Scheitelraum 14 ausbildet, in dem sich Schokoladenmasse sammeln kann. Beim Absenken des Verdrängungsstempels 7 wird dieser in die Ebene des Stempels 3.1 gebracht, so dass die Schokoladenmasse aus dem Scheitelraum 14 ausgedrückt wird. Sie genügt, um die Lufteinschlüsse auszupressen.

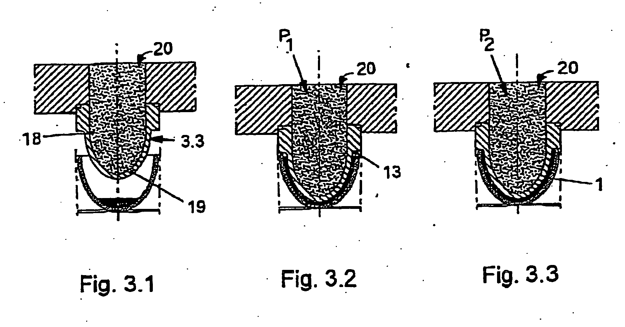

Bei einer zweiten Möglichkeit gemäss den Figuren 3.1 bis 3.3 ist vorgesehen, einen Stempel 3.3 schalenförmig auszubilden, wobei ein Innenraum 18 von einer schalenförmigen Hülle 19 umgeben wird. Diese Hülle 19 ist in gewissem Umfang flexibel.

Beim Absenken des Stempels 3.3 gemäss Figur 3.2 wird der Innenraum 18 mit Kühlwasser 20 beaufschlagt, welches unter einem bestimmten Druck p₁ steht. Nachdem der Stempel 3.3 die Schale 1 weitgehenst ausgeformt hat, wird der Druck des Kühlwassers auf einen Druck p₂ erhöht, wodurch die elastische Hülle 19 in gewissem Umfang ausgedehnt wird. Hierdurch werden die Lufteinschlüsse ausgepresst.

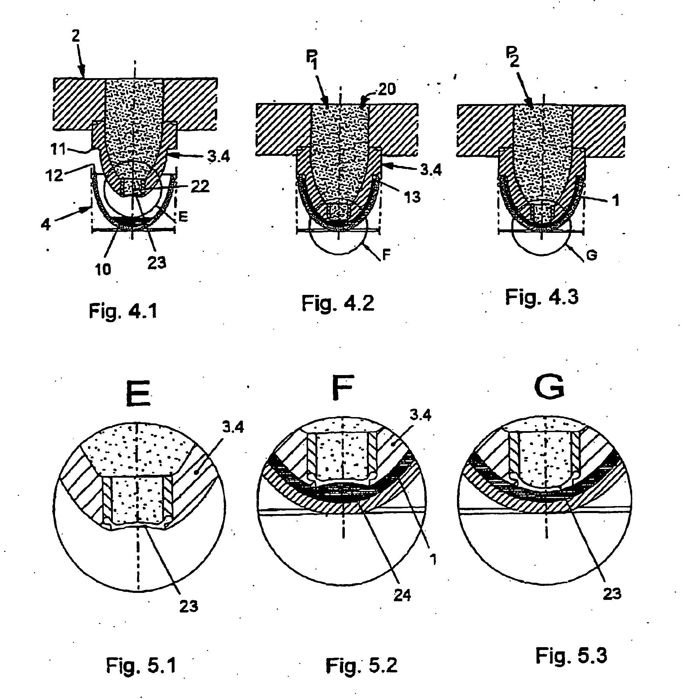

Bei einer dritten Möglichkeit gemäss den Figuren 4.1 bis 4.3 ist der Stempel 3.4 schalenförmig, jedoch zum grossen Teil aus einem starren Werkstoff hergestellt. Im Inneren von ihm wird Kühlwasser 20 geführt.

Der Stempel 3.4 weist im Scheitelbereich eine Öffnung 22 auf, die von einer Membran 23 überdeckt ist. Wie insbesondere aus Figur 5.1 ersichtlich ist, ist die Membran 23 nach innen gestülpt.

Gemäss Figur 4.2 wird der Stempel 3.4 in die Schokoladenmasse 10 abgesenkt, so dass sich die Schale unter Ausbildung von Lufteinschlüssen 13 ausbildet. Während diesem Verfahrensschritt wird der Druck p₁ auf das Kühlwasser 20 aufrechterhalten.

Aus diesem Grunde verbleibt die Membran 23 in der nach innen gestülpten Form, wie in Figur 5.2 ersichtlich. Dadurch bildet sich zur Schale 1 hin eine zusätzliche Schokoladentasche 24.

Nunmehr wird gemäss Figur 4.3 der Druck auf das Kühlwasser auf einen Druck p₂ erhöht, so dass die Membran 23 ausgestülpt wird, wie dies in Figur 5.3 erkennbar ist. Dabei drückt die Membran 23 die Schokolade aus der Schokoladentasche 24 heraus, so dass Lufteinschlüsse 13 beseitigt werden können.

### Positionszahlenliste

| | | | | | |
|---|---|---|---|---|---|
| 1 | Schokoladenschale | 34 | | 67 | |
| 2 | Formplatte | 35 | | 68 | |
| 3 | Stempel | 36 | | 69 | |
| 4 | Form | 37 | | 70 | |
| 5 | Formraum | 38 | | 71 | |
| 6 | Axialbohrung | 39 | | 72 | |
| 7 | Verdrängungsstempel | 40 | | 73 | |
| 8 | O-Ring | 41 | | 74 | |
| 9 | Ringraum | 42 | | 75 | |
| 10 | Schokoladenmasse | 43 | | 76 | |
| 11 | Schulter | 44 | | 77 | |
| 12 | Ringkante | 45 | | 78 | |
| 13 | Lufteinschluss | 46 | | 79 | |
| 14 | Scheitelraum | 47 | | | |
| 15 | Rohr | 48 | | | |
| 16 | Scheitel | 49 | | | |
| 17 | Freiraum | 50 | | | |
| 18 | Innenraum | 51 | | | |
| 19 | Hülle . | 52 | | | |
| 20 | Kühlwasser | 53 | | | |
| 21 | Gas | 54 | | | |
| 22 | Öffnung | 55 | | | |
| 23 | Membran | 56 | | | |
| 24 | Schokoladentasche | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | . | 65 | | | |
| 33 | | 66 | | | |

## Patentansprüche

1. Verfahren zum Herstellen von Verzehrgütern mit einer äusseren Schale (1) aus einer Masse (10), die in eine Form (4) eingegeben wird, in welche dann ein temperierter Stempel (3.1 bis 3.4) eintaucht, wobei die Masse (10) nach dem Eintauchen des Stempels (3.1 bis 3.4) unter einen zusätzlichen Druck gesetzt wird,
**dadurch gekennzeichnet,**
**dass** ein in dem Stempel (3.1 bis 3.4) geführter Verdrängungsstempel (7) in die Masse (10) eingetaucht oder ein zumindest teilweise elastischer Stempel (3.3, 3.4) nach dem Eintauchen mit einem höheren Innendruck beaufschlagt wird.

2. Vorrichtung zur Durchführung des Verfahrens nach Anspruch 1, **dadurch gekennzeichnet, dass** in dem Stempel (3.1) ein Verdrängungsstempel (7) geführt ist.

3. Vorrichtung nach Anspruch 2, **dadurch gekennzeichnet, dass** der Stempel (3.1) eine Axialbohrung (6) aufweist, in der der Verdrängungsstempel (7) geführt ist.

4. Vorrichtung nach Anspruch 3, **dadurch gekennzeichnet, dass** der Verdrängungsstempel (7) in Ausgangslage etwas in die Axialbohrung (6) zurückgezogen ist.

5. Vorrichtung zur Durchführung des Verfahrens Anspruch 1, **dadurch gekennzeichnet, dass** der Stempel (3.3, 3.4) zumindest teilweise elastisch ausgebildet ist und einen Innenraum (18) umgibt, der mit einem Druckmedium beaufschlagbar ist.

6. Vorrichtung nach Anspruch 5, **dadurch gekennzeichnet, dass** das Druckmedium gleichzeitig ein Kühlmedium ist.

7. Vorrichtung nach Anspruch 5 oder 6, **dadurch gekennzeichnet, dass** der Stempel (3.4) eine Öffnung, vorzugsweise im Scheitelbereich aufweist, die von einer Membran (23) überdeckt ist.

8. Vorrichtung nach Anspruch 7, **dadurch gekennzeichnet, dass** die Membran (23) in Ausgangslage des Stempels (3.4) nach innen gestülpt ist, sich unter Druckerhöhung aber nach aussen stülpt.

## Claims

1. Method of producing edible goods having an outer shell (1) formed from a mass (10), which is inserted into a mould (4), in which a temperature-controlled die (3.1 to 3.4) is then immersed, the mass (10) being placed under an additional pressure after the immersion of the die (3.1 to 3.4), **characterised in that** a displacement die (7), which is guided in the die (3.1 to 3.4), is immersed in the mass (10), or an at least partially resilient die (3.3, 3.4) is acted-upon, after the immersion, with a higher internal pressure.

2. Apparatus for carrying out the method according to claim 1, **characterised in that** a displacement die (7) is guided in the die (3.1).

3. Apparatus according to claim 2, **characterised in that** the die (3.1) has an axial bore (6), in which the displacement die (7) is guided.

4. Apparatus according to claim 3, **characterised in that** the displacement die (7), in the initial position, is somewhat withdrawn into the axial bore (6).

5. Apparatus for carrying out the method according to claim 1, **characterised in that** the die (3.3, 3.4) is at least partially resilient and encloses an interior (18) which can be acted-upon with a pressure medium.

6. Apparatus according to claim 5, **characterised in that** the pressure medium is at the same time a cooling medium.

7. Apparatus according to claim 5 or 6, **characterised in that** the die (3.4) has an opening, preferably in the junction region, which is covered by a diaphragm (23).

8. Apparatus according to claim 7, **characterised in that** the diaphragm (23) is inwardly inverted in the initial position of the die (3.4), but it inverts outwardly under increased pressure.

## Revendications

1. Procédé de fabrication de produits alimentaires avec une coquille extérieure (1) à partir d'une masse (10) qui est introduite dans un moule (4) dans lequel plonge alors un poinçon thermostatisé (3.1 à 3.4), la masse (10) étant mise, après la plongée du poinçon (3.1 à 3.4), sous une pression additionnelle ;
**caractérisé par le fait**
**qu'**un poinçon de refoulement (7) guidé dans le poinçon (3.1 à 3.4) est plongé dans la masse (10) ou qu'un poinçon au moins partiellement élastique (3.3, 3.4) est soumis, après la plongée, à une pression intérieure supérieure.

2. Dispositif pour la mise en oeuvre du procédé selon la revendication 1, **caractérisé par le fait que** dans le poinçon (3.1) est guidé un poinçon de refoulement (7).

3. Dispositif selon la revendication 2, **caractérisé par le fait que** le poinçon (3.1) présente un alésage axial (6) dans lequel est guidé le poinçon de refoulement (7).

4. Dispositif selon la revendication 3, **caractérisé par le fait que** le poinçon de refoulement (7) est, en position de départ, quelque peu reculé dans l'alésage axial (6).

5. Dispositif pour la mise en oeuvre du procédé selon la revendication 1, **caractérisé par le fait que** le poinçon (3.3, 3.4) est réalisé de manière au moins partiellement élastique et entoure un espace intérieur (18) qui peut être soumis à un fluide de pression.

6. Dispositif selon la revendication 5, **caractérisé par le fait que** le fluide de pression est en même temps un fluide réfrigérant.

7. Dispositif selon la revendication 5 ou 6, **caractérisé par le fait que** le poinçon (3.4) présente une ouverture, de préférence dans la zone de sommet, qui est recouverte par une membrane (23).

8. Dispositif selon la revendication 7, **caractérisé par le fait que** la membrane (23) est, en position de départ du poinçon (3.4), enfoncée vers l'intérieur, mais s'enfonce toutefois vers l'extérieur en cas d'augmentation de la pression.
